# EUROPEAN PATENT APPLICATION

(11) **EP 0 968 755 A2**
(43) Date of publication of application: **05.01.2000**
(21) Application number: 99110162.7
(22) Date of filing: 25.05.1999
(51) Int. Cl.: B01D 61/02, B01D 65/00, C02F 1/44, F16L 1/12, H02G 1/10

(54) **Hydrostatic pressure plant for separation/concentration/desalination of liquids, in particular sea or brackish water, via reverse osmosis**

(30) Priority: 25.05.1998 IT FI980124
(71) Applicant: WIP KG, 81369 München (DE); EUROPEAN COMMISSION JOINT RESEARCH CENTER- DG-JRC Environment Institute, I-21020 Ispra (Va) (IT); ENEL S.p.A., I-00198 Roma (IT)
(72) Inventor: Grassi, Giuliano, 50132 Firenze (IT); Chiaramonti, David, 50134 Firenze (IT); Helm, Peter, 82335 Berg (DE); Pacenti, Paolo, 22036 Erba (Prov. of Como) (IT); Reali, Mario, 20151 Milano (IT); Toci, Fernando, 21100 Varese (IT)
(74) Representative: Gervasi, Gemma, Dr.

(57) **Abstract**

Plant for concentration/separation of one or more phases or components of a liquid mixture or solution, essentially comprising in combination:
means (3) for placing one or more modules (14) at a predetermined depth to concentrate/separate the liquid by means of reverse osmosis membranes working at the hydrostatic pressure that corresponds to the above-mentioned operating depth; means of electricity supply for a series of pumps (2) including that for the liquid to be treated; means (4, 5, 6) for collecting and/or recovering (lifting to the surface) of at least one separated phase of the liquid.

## Description

### Field of the invention

The present invention concerns plants exploiting the reverse osmosis principle for separating solvent from solutes in a liquid solution, and specifically, for desalinating seawater or brackish water and for purifying contaminated water with the help of semipermeable membranes of reverse osmosis technology working under high hydrostatic pressure. The present invention aims at relieving problems connected with potable water supply in arid coastal areas by desalinating seawater and brackish water or by purifying recyclable, contaminated water.

Conventional (surface-based) industrial desalination plants applying the reverse osmosis technology are operational in several countries and require that the treated feed water be pressurised to a relatively high operating pressure (around 60 - 80 bar for seawater). In the case of a seawater desalination plant, about one third (depending on the overall plant operating conditions) of the feed-seawater flow rate is converted into desalinated water at about atmospheric pressure while the remaining two thirds are discharged as brine at a pressure inferior but rather close to the operating feed pressure. In recent and technologically advanced plants, some suitable energy recovery device (for instance a hydraulic turbine) is utilised for extracting as much mechanical energy as possible from the pressurised brine before its final dumping at some suitable site (e.g. in the sea depth).

Presently utilised energy-recovery devices in conventional plants do present several drawbacks from both the technical and the economical viewpoints since they are complex and expensive devices requiring frequent maintenance with consequently reduced plant productivity. Another drawback in conventional plants is related to the need of a suitable chemical pre-treatment of available feed water to assure adequate working and durability of semipermeable membranes, all of which represents a sizeable increase in equipment and operational costs.

The complexity of feed water pre-treatment systems in desalination plants depends on feed-water characteristics. A well of appropriate depth is often utilised to reduce pre-treatment requirements through natural ground filtering. In the case of surface feed water, an extended chemical pre-treatment phase is generally required in several steps: clarifying systems, oxygenation, sand filters, dosing systems for chlorine, sodium bisulphate, and coagulants, ion exchangers (deconcentrators), eventually ozonisation, sterilisation, etc.

### Aim of the invention

In view of the above mentioned drawbacks of conventional desalination plants, the present invention proposes an innovative energy-efficient and economical separation/desalination reverse osmosis technology which makes it possible to produce purified/desalinated water in a plant having a suitably deep osmotic conversion section for the free exploitation of available hydrostatic head, and overall advantageous features as to installation, maintenance, and repair operations.

### Summary of the invention

For the desalination of seawater, the present invention foresees a submarine reverse osmosis plant with osmotic membrane modules sited at an operating depth in the range 400 - 600 m below sea surface level. For the desalination of brackish water, a suitable operating depth is in the range 60 - 100 m below surface level.

In the present invention, the required pressurisation of the feed water in the reverse osmosis process is provided for free by the available feed water hydrostatic head. Only a low-head circulation pump has to be utilised in the feed/brine circuit, for pumping feed water into the membrane module inlets, and for pumping the brine from the module outlets away to a suitable discharge site. A high-head pump is required in the desalinated-water circuit for pumping the produced desalinated water (the flow rate of which is some 20 - 30% of the feed water flow rate, depending on membrane type and operating conditions) from the deep osmotic section up to surface level.

An advantageous feature of the desalination plant proposed with the present invention concerns the fact that equipment installation and maintenance operations, in particular checking and substitution of membrane modules, apply relatively standard operative methods (without the need for deep-sea interventions requiring specialised personnel and dedicated boats) thus providing a steady prefixed production capacity.

The following points clarify the advantages of the present invention:
- A plant operating according to the invention requires roughly half the electric energy required by a conventional optimised plant of equivalent desalinated-water-production capacity (around 2 kWh/m³ versus some 4 - 5 kWh/m³).
- Osmotic membranes function better and have an increased lifetime since they can operate at a reduced conversion coefficient r (ratio between the desalinated and the treated seawater flow rate; r ≈ 0.10-0.30 instead of conventional values r ≈ 0.35 - 0.45).
- No chemical pre-treatment of feed water is required since deep-sea water is rather pure without critical organic and inorganic contamination.
- The obnoxious noise of conventional plants is substantially eliminated. The following features are also noteworthy:
- The overall energy consumption is largely reduced due to the fact that a high pressure pump has to be used only for pumping desalinated water
- The free seawater hydrostatic head eliminates the need of a high-pressure pump in the feed/brine circuit where only a low-head circulation pump is required so that a reduced energy consumption is also favoured by the elimination of pulsating pressure waves, which are known to decrease the overall performance of membrane modules and membrane lifetime.
- The produced desalinated water is of better or similar quality with respect to the water produced in conventional plants operating at an equivalent pressure level.
- Since the osmotic section is at a great depth, no chemical feed-water pre-treatment is necessary; just a coarse filtration to avoid membrane clogging by external materials is sufficient. Furthermore, at the operating depth, the feed-water flow through the membrane modules remains steady, which favours membrane efficiency.

Interventions for installation, substitution, and maintenance operations are carried out at low cost in straightforward ways thus ensuring plant availability and reliability of the water supply offered to the user.

### List of drawings

These and other advantages will be fully understood by any expert through the following description and the attached drawings given as non restrictive examples, of which:

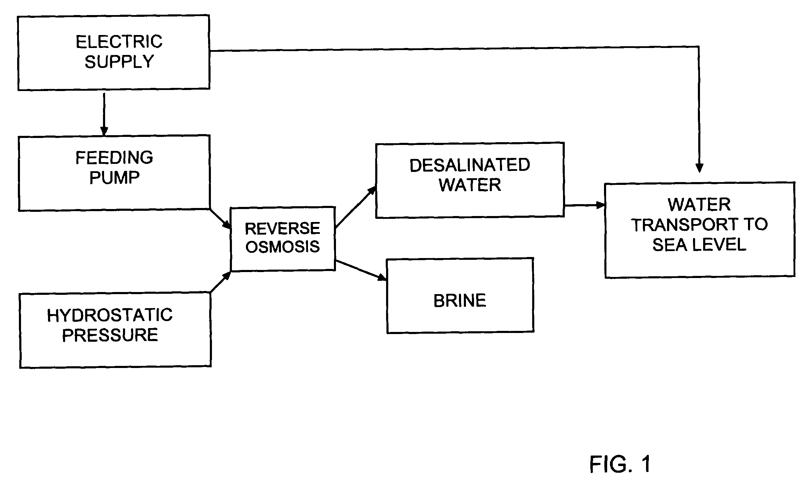

fig. 1 shows an operational scheme of the plant;
fig. 2 schematically depicts a first embodiment of a plant constructed after the invention;
fig. 3 schematically depicts a second embodiment of a plant constructed after the invention;
fig. 4 schematically depicts a suitable configuration for a permeator module battery;
fig. 5 schematically depicts a reverse osmosis module in a plant after the invention;
fig. 5a depicts a rack containing fig. 5 modules to be immersed at great depth;
fig. 6 depicts a third embodiment of the plant after the invention;
fig. 7 depicts an alternative configuration of the plant after the invention;
fig. 8 depicts a plant after the invention for which maintenance and membrane substitution operations take place at sea-surface level;
fig. 9 depicts a second embodiment of the means for maintenance and membrane substitution operations at sea level.
fig.10 shows a third preferred embodiment of the invention

### Detailed Description

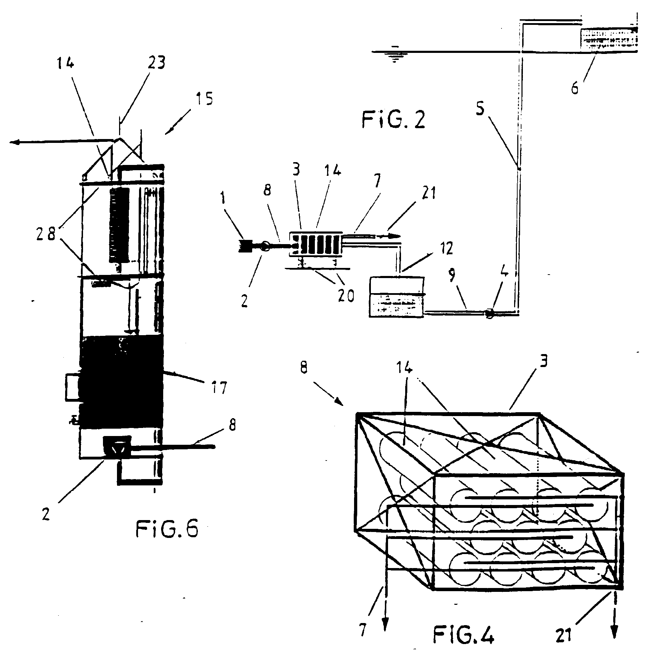

With particular reference to fig. 2, a plant according to the proposed invention is constituted by the following elements:
- Filter group 1 for the feed water;
- Feed/brine circulation pump 2 necessary for overcoming the internal pressure losses of the circuit;
- Container structure 3 for the membrane modules 14 for the realisation of reverse osmosis, composed preferably of metal draw pieces or similar. Structure 3 will be placed on the sea ground through special anchor logs or conventional anchoring means 20. The container structure and the whole submerged part in general can be connected to, anchored, and/or appended at a floating buoy of favourable characteristics, in the case that the sea ground does not permit the anchoring or is in greater depth.
- Submerged buffer tank 12; placed below the modules in order to obtain a natural fall of the desalinated water. The dimensions of this element can be very diverse in consequence of the productive capacities of the modules and of the functional and operational characteristics of the system.
- Group 4, 5 for the transport of the desalinated water to sea level;
- Principal tank 6 for accumulating desalinated water at sea level;
- Group 7 constituted by advantageously dimensioned tubing in order to brine discharging in a way that does not interfere feeding.

The plant is completed by electric lines, not illustrated in fig. 2, that connect the energy supply to the pumps 2 and 4 and to different possible sensors or other eventual accessories (electric valves, instrumentation, control units, etc.).

In the realisation of the plant some technical problems had to be solved owing to the fact that the reverse osmosis modules 14 available on the market are not adapted to working under high external pressures. In particular, the covers of the modules must be capable of withstanding not only internal pressures (as occurring usually in superficial plants), but also the external hydrostatic pressure especially when it is not yet in equilibrium and particularly at the moment of immersion in the depth.

According to the invention a solution of the problem has been given through a module of the type illustrated in fig. 5 with reference to the exemplifying case of a hollow-fibre permeator constituted by a covering liner 24 closed by heel plates 26.

The cover contains hollow-fibre sheaves 25 desalinating the saltwater entered by feeding 8 and discharging the desalinated water to line 21, while the brine component is expelled from line 7.

Those modules as being constructed up to the present can operate in presence of high internal pressure and the seals against the external are constructed for this aim. On the contrary, during the sinking phase to operating depth and prior to starting operation, the permeator is under remarkable external pressure. In order to obviate this problem different solutions can be adopted being alternative between each other:
1) Addition of an external protection disc, which has the function of a sealing plug placed at the two ends of the liner 24. The most adapted material is of plastics of appropriate resistance. This solution is preferable for small productions;
2) Modification of the closing plates 26 of the module with two sealing rings 27 (segmented ring) both on the external and the internal face of the plates 26 in order to prevent their movement to the module centre due to the action of the external pressure. This solution is preferable in case of substantial production of desalinated water.
3) Insertion of the modules in a sealed vessel, which allows the utilisation of commercial standard modules.

Other solutions to better adapt permeator modules to the proposed solution could be adopted considering the different peculiarities of single plants. A further system consists for example in activating the feed-brine pump during the phase of immersion in order to have always an internal pressure in the module that balances the external.

As can be seen from fig. 4, the modules that drive the reverse osmosis are contained and packed on the inside of container 3. Container 3 can be constructed in metal or plastics draw pieces or tubes or similar or can be sealed from the external pressure. The packing system in triangular or square grid is to reduce the volume to a minimum. According to the illustrated scheme a tubing 21 collects the desalinated product water from the different modules which are fed from line 8, while the tubing 7 collects the discharge of the brine. Advantageously the system is modular and therefore can be dimensioned at pleasure.

This type of disposition is not binding from a constructive point of view, but is the best compromise in terms of space optimisation in function of the number of modules used.

During operation the feed water, filtered by group 1, is treated by pump 2 that transmits it through one or more ducts 8 to the internal circuit constituted by the different reverse osmosis modules 14 (the modules can be arranged either in series or in parallel) contained in structure 3. On the inside of the modules happens the osmotic separation of the high concentration part (brine), which is dismissed through ducts 7, from the desalinated water, which is conveyed through ducts 9 to the raising group constituted by a pump 4 and a final duct 5. In the illustrated scheme, at the output of duct 5 there is a vessel 6 for the collection of the treated water, preferably installed ashore. Fig. 3 illustrates a second embodiment autonomous from an energetic viewpoint being provided with a feeding source 22 constituted by renewable energy, wind and/or wave and/or solar generator or any conventional autonomous electric generator connected through appropriate electric cables 18 to the immersed components. In this case the plant comprises also a floating platform 13 of adequate dimensions being placed above the means 20 of anchoring of the immersed devices and an also floating vessel 6. The energy source can also be installed on the dry land in particular coastal zones (for example, where the depth of the sea ground increases very rapidly).

The activation of the submersed pumps can also happen using pressurised fluids (air, water, or oil) that drive hydraulic rather than electric motors. The pressurisation of these fluids can take place using the potential of one of the above mentioned power sources.

In a further solution (fig. 6) the plant is constituted by a submergible group 15, composed of one or more osmosis modules 14 contained on the inside of a structure 16 that feeds directly a vessel 17. The complete group, suitably supported (by a ship or a floating platform), can be let down in the sea until reaching the operating depth (and thus the operating pressure) and then hoisted to the surface by means of lines 5 when the buffer vessel is filled. An eventual evolution of this solution could be represented by a submergible group similar to that described, but autonomous and mobile through remote control. The plant can be supplied with a localisation system of type GPS, with a seawater-sampling system for analysis and confronting, besides a device 28 of data transmission relating to the depth, the asset and the water level inside the vessel.

For the latter solution, different constructive configurations are possible, dependent fundamentally on the performance of the plant and the type of platform being available. However, a solution being particularly compact and adapted for small boats with a limited number of operators is a single-module one 14 of fig. 6.

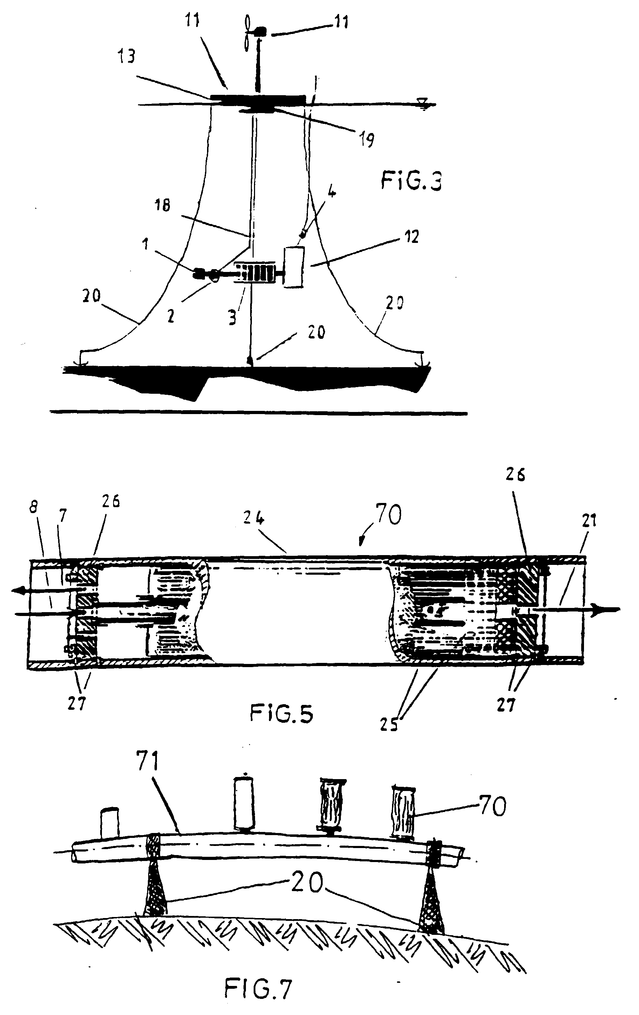

Fig. 7 shows a further alternative configuration of this plant type. In this case a certain number of permeators of the type illustrated in fig. 5 are put out of the container vessel and directly exposed to the hydrostatic pressure.

The modules are positioned on a submerged tube in which the product (desalinated water) flows for being transported to the surface. The submerged tube can be laid or suspended on the sea ground.

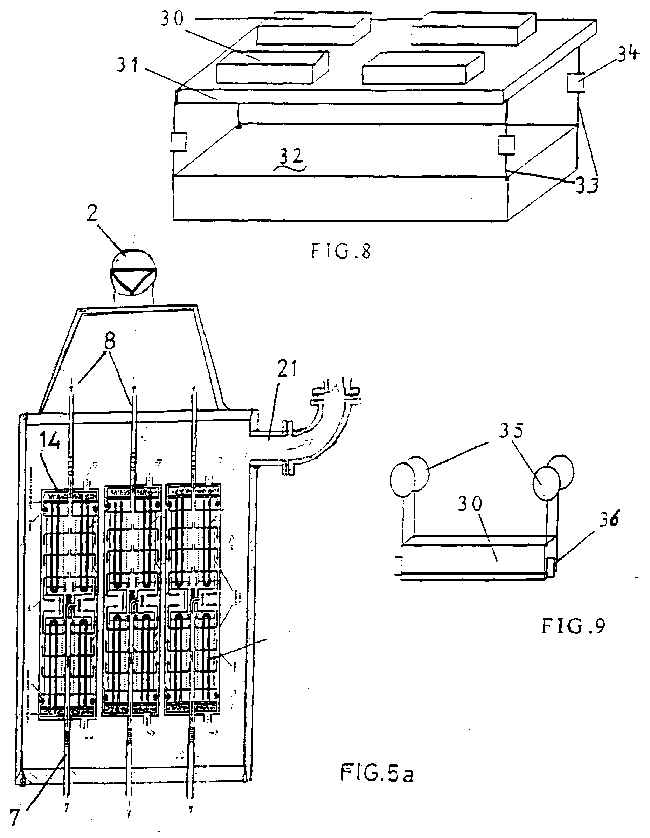

With reference to figures 8, 9 the means for resolving the problem of substituting and maintaining the used membranes at sea level are schematically illustrated.

In fig. 8, there are illustrated the membrane units 30 containing one or more reverse osmosis modules. The units 30 are fixed to a panel 31, which in its turn is connected by means of cables 33 to an anchor log 32 put down to the ground and constructed in a well-known way.

The units 30 are floating and thus hold in tension the cables 33. The latter are provided each with at least one explosive load 34 or an automatic detaching system, both to be activated remotely for example by means of ultrasound.

Operating the explosive loads to substitute or maintain a unit 30, the loads 34 are made explode, the cables 33 tear and the intervention is executed from an assistance boat to the floating units having reached the surface. In order to let the units 30 down to deep sea again, another anchor log is connected to them sinking to the sea ground and dragging the units 30 and the panel 31 to depth.

Operation is analogous in the case of automatic disconnection systems.

Holding in mind the substantial absence of currents at operating depth (500 - 600 m), the desalination units can also be in total nearly neutral and called back to the surface by a working vessel (even of small dimensions) provided with a capstan.

For maintenance operation, lift bags can be attached to the units, inflated, and held in pressure during the time of maintenance. At the end the lift bags are deflated and the units turn naturally to operating depth.

According to the pre-selected instrumentation solution one or more desalination units 30 can be used, each provided with independent tubes and cables for connection to the shore or with confluent tubes and cables towards a single line connection to the solid earth.

In fig. 9 an alternative solution is shown, which avoids the necessity of applying an anchor log for every intervention. In this case the units 30 are lowered to the ground and connected to lift bags 35, inflatable by compressed-air cylinders 36 with remote control e.g. by ultrasound.

Advantageously, to inflate the lift bags 35 a source of compressed gas can be used.

According to a further feature of the invention the water to be treated by the desalination units (feed water) can be made circulate (by means of an appropriate circulation pump) in a circuit passing a station at sea level where the controls, verifications of operation and eventually chemical and filtration treatments take place. In this way it is possible to continuously keep the performance of the plant under control and analyse the water prior to the treatment by the membranes.

In all the solutions described above it is also possible to provide for the application of robotised systems for the connection between the desalination units and to the tubes and electric cables on the solid earth.

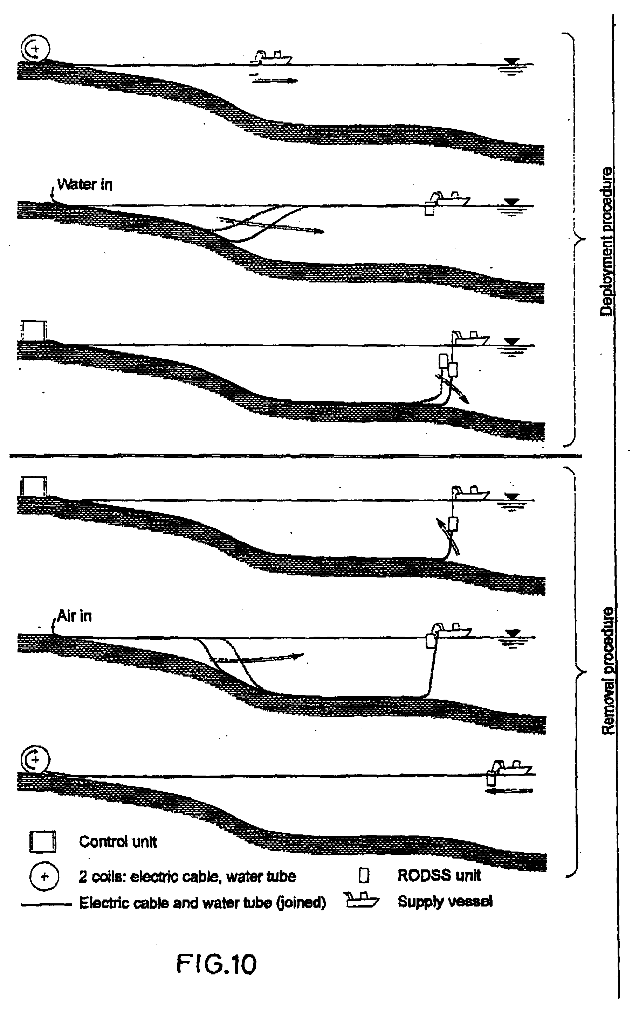

In fig.10 a further embodiment of the plant is illustrated.

According to a further aspect of the invention, in Fig.10 there is also illustrated a method which is particularly designed to optimise the deployment/recovery procedure of reverse osmosis unit and which is more generally suitable to deploy/recover water tubes and other cables (for example electric cable) to be laid in depth.

In this embodiment the plant is deployed from the coast: both the electric cable and the water tube rolls are located on the coast delivering the cable and the tube towards the sea.

In order to reduce the needs for large supply vessels and boats, the water discharge tube is used as floating element to sustain the electric cable. The plant itself is floating and it will be connected to an adequate anchor log in order to be lowered to the operating depth.

The deployment procedure will be executed by joining the water tube to the electric cable. The head of the water tube is closed (by plug), carried by the boat, and filled of air, so to be floating and capable of sustaining the electric cable.

These two cables (electric cable and water tube) are delivered from the coastal area by rolls: a boat pulls them to the selected operating location. At this point, the water tube is opened and filled with water from the coastal station. This will make the tube and the electric cable sink (negative buoyancy in water) from the coast towards the sea. Finally, the tube and the anchor log are connected to the RO unit, which is then lowered to operating depth.

In order to recover the equipment, the RO unit is brought to the sea surface by remote-activated lift bags or similar systems, then the water-discharge tube is unfastened from the unit, and compressed air is blown inside the tube from the coastal station. It will lift the tube and the electric cable to the sea surface, starting from the part near the land. Then the complete plant is recovered, and the cable and tube are rolled up from the land.

The operating depth can be reduced to a lower value, typically 300 - 400 m, if the RODSS unit operates as a first stage of a multistage plant. In this case, the partially desalinated water produced at that depth and delivered to the surface will be further treated in a standard RO plant in order to meet the final requirements for desalinated water.

As non-restricting example consider:
a plant positioned at a depth of about 600 m (pressure of about 60 bar) and provided with 3 commercial modules of hollow-fibre type, produced by Du Pont Permasep (Mod. B10 - 6835T), in which the feeding seawater is displaced continuously by a circulation pump, while the quantity of desalinated water is transported in a discontinuous way by a discharge pump, which is switched on when the water level inside the buffer vessel reaches the prefixed level. In this configuration it is possible to obtain the following performances:
   a) flow rate of desalinated water discharge 6.52E-04 m³/s
   b) flow rate of processed saltwater (feed) 5.37E-03 m³/s
   c) discharge pump 4 power 30 kW
   d) circulation pump 2 power 2.8 kW
   e) energy necessary for every m³ of desalinated product water 2.6 kWh/m³

One can note that the energy consumption per cubic metre of desalinated product water, around 2.6 kWh/m³ against a value for conventional plants of around 5 kWh/m³, presents a considerable energy saving per unit product volume.

It is also possible that modules of greater dimensions and/or of different type (spiral, plate, etc.) exhibit a specific consumption even inferior. Therefore it is obvious that every eventual technological progress regarding the membranes (for example a minor operating pressure) influences immediately also the performance of the proposed plant (reducing in consequence the operating depth).

The present invention has been described with reference to preferred forms of realisation, however equivalent modifications can be applied by every expert without leaving the limits of the protection granted to the present industrial right.

## Claims

1. Plant for concentration/separation of one or more phases of a mixture or liquid solution, characterised by the fact of containing in combination: means (20, 23, 33, 34) to hold one or more modules (14) for the concentration/separation of the desired phase at a pre-established depth that work by means of semipermeable membranes by reverse osmosis operating at the hydrostatic pressure corresponding to said depth: feeding and circulation means (2) of the liquid to be treated; means (4, 5, 6) for collecting and/or lifting to the surface of the separated phase of the fluid to be collected.

2. Plant according to claim 1, characterised by the fact that the liquid mentioned consists of seawater and the said separated phase is desalinated water.

3. Plant according to claims 1 - 2, characterised by the fact of containing a filter group (1) upstream of the said feeding means.

4. Plant according to claims 1 - 2, characterised by the fact of containing a buffer tank (12) located at a lower depth in respect to the modules (14).

5. Plant according to claims 1 - 2, characterised by the fact that the said holding means are constituted by anchor logs or anchors (20).

6. Plant according to claims 1 - 2, characterised by the fact that the said modules are contained in a structure (3).

7. Plant according to claims 1 - 2, characterised by the fact that the said feeding means are constituted by a circulation pump (2).

8. Plant according to claims 1 - 2, characterised by the fact that the said means of collection and lifting are constituted by a pump (4) that lifts the desalinated product water and transports it through ducts (5) to a tank (6) located at the surface.

9. Plant according to claim 8, characterised by the fact that the said ducts (5) constitute a circuit passing a station at sea level in order to continuously keep the productivity of the plant under control and analyse and treat the water upstream of the modules (14).

10. Plant according to claims 1 - 9, characterised by the fact of providing for a plurality of modules arranged packed in a triangular or square grid in said structure (3).

11. Plant according to claims 1 - 10, characterised by the fact of comprising furthermore a floating platform (13) above the point of anchoring of the structure (3) and provided with an independent energy source (11).

12. Plant according to claims 1 - 11, characterised by the fact that the said energy source is constituted by one or more renewable energies among: wind, wave, bioenergy, solar, hydrogen fuel cells.

13. Plant according to claims 1 and 2, characterised by the fact of being constituted by a submergible group (15) with one or more osmosis modules (14) feeding directly a tank (17) and contained inside a structure (16) that is lowered to and hoisted from the operating depth by means of cables (23) operated from a ship or pontoon.

14. Plant according to claim 13, characterised by the fact of providing for an autonomous propulsive system, radio-controlled from a fixed station.

15. Plant according to claims 1 and 2, characterised by the fact that the membranes of said modules (14) are directly exposed to the external pressure.

16. Plant according to claims 1 and 2, characterised by the fact of being constituted by a submarine tubing in which several modules (14) are inserted with or without the cover (24) and by the fact the desalinated product water is collected in the main tubing and pumped to sea level.

17. Plant according to one or more of the previous claims, characterised by the fact that the said depth is between 300 and 800 m under sea level and between 50 and 100 m for brackish water.

18. Plant according to one or more of claims 1 - 17, characterised by the fact of comprising remotely controlled means (31 - 36) for the substitution and maintenance of the modules (14).

19. Plant according to claim 18, characterised by the fact that the said means comprise a panel (31) on which one or more desalination units (30) are fixed in a removable way and that is connected by means of cables (33) to an anchor log (32) placed on the sea ground, the units being floating in order to keep the cables (33) in tension, which cables are provided each with at least one explosive load or automatic detaching system to be activated by remote control.

20. Plant according to claim 18, characterised by the fact that the said means comprise sinking desalination units (30) connected to lift bags (35) inflatable by compressed air cylinders that are remotely controlled.

21. Plant according to claim 18, characterised by the fact of comprising robotised systems for the connection of the desalination units to the solid earth or to a unit on the surface by means of water tubes and feed and control cables.

22. Plant according to claim 18, characterised by the fact of comprising units (30) of nearly neutral weight as regards the liquid of immersion in order to be hoisted to the surface by a boat of small dimensions and provided with inflatable buoys for maintenance operation at sea level.

23. Plant according to claim 2, characterized in that said collecting and lifting means consist of water discharge tube rolls and electric cable located on the coast and that said modules (14) are part of at least one floating desalination unit, said water discharge tube rolls, electric cable and desalination unit being deployed from the coast by a supply vessel and then recovered from the coast.

24. Plant according to claim 23, characterized in that said water tube is a variable buoyant water tube joined to said electric cable so that when it is filled with air is capable of sustaining the cable, and when it is filled with water is capable of sinking together with the electric cable.

25. Plant according to claim 24, characterized in that said unit is a positive buoyancy unit provided with remote-activated lift bags and with anchor logs to which the unit can be connected to be lowered, and that the unit buoyancy can be varied by emptying and refilling a product-water buffer tank of the same unit.

26. Module with semipermeable membranes for reverse osmosis plants according to one or more of the previous claims, having a covering liner (24) closed by heel plates (26), characterised by the fact of comprising closing means able to seal from the external pressure.

27. Module according to claim 26 characterised by the fact that the said closing means consist of sealing heel plates.

28. Module according to claim 26, characterised by the fact that the said sealing means consist of heel plates (26), each provided with two sealing rings (27) located both at the external and internal side.

29. Method to deploy/recover from a coast station electric and similar cables to be laid in depth, comprising the steps of :
- providing electric cable and water tube rolls on the coast ;
- providing a supply vessel able to carry from coast to open sea a free extremity of said tube and cable;
joining the water tube to the electric cable ; closing by plug the free extremity of the water tube so that the tube is floating and capable of sustaining the electric cable ; pulling the tube and the cable by the supply vessel to the selected operating location on the sea surface; opening the free extremity of the tube and filling the tube with water by pump from the coastal station so that the tube and the electric cable will sink starting from the coast towards the sea ;
and recovering the sunk tube and cable by the following steps:
- blowing compressed air inside the tube from the coastal station so that it will lift the tube and the electric cable to the sea surface starting from the part near the coast ;
- rolling up the cable and tube from the coast.

30. Method according to claim 29, comprising the steps of :
- providing a RO unit carried by said supply vessel ;
- providing said water tube as discharge tube of the unit and connecting the unit to the free extremity of the cable ;
- providing anchor log and remote-activated lift bags connectable to said unit ;
- varying the unit buoyancy by emptying and refilling a product-water buffer tank of the same unit respectively in the lifting and sinking step of the free extremity of said tube and cable.
